# EUROPÄISCHE PATENTSCHRIFT

(11) **EP 1 156 434 B1**
(45) Veröffentlichungstag und Bekanntmachung des Hinweises auf die Patenterteilung: **12.02.2003**
(21) Anmeldenummer: 00890156.3
(22) Anmeldetag: 16.05.2000
(51) Int. Cl.: G06F 17/60

(54) **Vorrichtung und Verfahren zur Automatisierung des Betriebsmittel- und/oder Verbrauchsmittelmanagements eines Analysators**
Device and method for automating the resource and operating material management of an analysis instrument
Dispositif et méthode pour automatiser la gestion des ressources et des consommables d'un instrument d'analyse

(43) Veröffentlichungstag der Anmeldung: 21.11.2001
(73) Patentinhaber: F.HOFFMANN-LA ROCHE AG, 4070 Basel (CH)
(72) Erfinder: Berger, Hans, Dr., 8020 Graz (AT); Kanter, Ulrich, Dipl.-Ing., 8141 Unterpremstätten (AT); Karpf, Hellfried, Dr., 8043 Graz (AT); Ziegler, Werner, Dipl.-Ing., 8043 Graz (AT)
(74) Vertreter: Babeluk, Michael, Dipl.-Ing. Mag.

(56) Entgegenhaltungen:
- EP-A- 0 822 473
- WO-A-98/51991
- WO-A-99/15990
- DE-A- 19 618 962
- US-A- 5 819 110

## Beschreibung

Die Erfindung betrifft ein Verfahren zur Automatisierung des Betriebsmittel- und Verbrauchsmittelmanagements eines medizinischen Analysators oder Analysensystems sowie einen Analysator oder Analysensystem zur Durchführung des Verfahrens.

Die DE 196 18 962 A1 beschreibt beispielsweise ein System zum Überwachen und Nachfüllen von Warenausgabeautomaten, welches sich dadurch auszeichnet, dass der Füllstand der einzelnen Warenbestände mit Hilfe von Sensoren ermittelt und mit Hilfe von Datenfernübertragung an eine Zentrale gemeldet wird, von der die Auffüllung der Warenbestände veranlasst wind. Der Füllstand der einzelnen Warenbestände, beispielsweise der Schächte, in denen sich gleiche Waren befinden, wird dauernd mit Hilfe von Sensoren ermittelt, wobei die entsprechenden Daten mit Hilfe von Datenfernübertragung an eine Zentrale gemeldet werden. Um Kosten für die Datenübertragung zu sparen, ist weiters vorgesehen, eine Übertragung nur nach einer vorgegebenen Anzahl von Verkaufsvorgängen durchzuführen bzw. gemäß einer weiteren Ausführungsvarlante die Daten jedes Warenausgabeautomaten von der Zentrale aus abzurufen. Derartige Systeme sind allerdings im medizinischen Bereich nicht einsetzbar.

Auf dem Gebiet der Umwelt- oder Lebensmitteltechnologie insbesondere jedoch in der Labor- bzw. Medizintechnik kommen eine Vielzahl elektrochemischer, optochemischer bzw. spektroskopischer Messverfahren und Analysatoren zum Einsatz, welche meist eine aufwendige Verwaltung der notwendigen Betriebs- und Verbrauchsmittel erfordern. Unter dem Begriff Betriebsmittel sollen im folgenden alle für den Betrieb eines Analysators oder eines Analysensystems erforderlichen Hard- und Softwarekomponenten verstanden werden, welche einer Alterung, einer Abnützung oder einem Verschleiß unterworfen sind und daher regelmäßig erneuert oder ersetzt werden müssen. Darunter fallen sowohl Hardwarekomponenten wie Sensoren, Sensorkassetten (Einheiten bzw. Module, welche durch den Anwender ausgetauscht werden können und meist mehrere Einzelsensoren für unterschiedliche Parameter in einer Messkammer enthalten), Zubehörteile wie Leitungen, Dichtungen etc., als auch Softwarekomponenten wie Betriebssysteme, Steuer- und Auswerteprogramme. Unter Verbrauchsmittel fallen beispielsweise Reinigungs-, Kalibrier- und Qualitätskontrollmittel, aber auch Druckpapier und Tintenpatronen etc. Insbesondere bei der Verwendung mehrerer Analysatoren unterschiedlicher Hersteller verursacht das Management dieser Betriebs- und Verbrauchsmittel, beispielsweise deren Bestellung und Lagerhaltung, das Vormerken von Wartungs- und Serviceterminen sowie das Einholen aktueller Informationen über Produkt- und Softwareentwicklungen einen großen zeitlichen und personellen Aufwand.

Aus der WO 99/15990 A1 ist beispielsweise ein computerisiertes System zur Verteilung medizinischer Produkte in einer Klinik bekannt. Mit dem System wird ein Vorratslager bewirtschaftet, wobei das Computersystem alle Informationen im Zusammenhang mit den verteilten Produkten, den Lagerbeständen und den Herstellern sowie Vertreibern der Produkte koordiniert und bei Unterschreiten gewisser Lagerbestände auf elektronischem Weg für Nachbetellungen sorgt. Dazu ist der Klinikcomputer elektronisch mit den Computersystemen der Hersteller und Vertreiber der Produkte verbunden.

Die eingangs geschilderte Problematik tritt vor allem im klinischen Bereich und im point-of-care-testing (POCT)-Bereich auf. Der Bereich klinische Chemie befasst sich mit der Durchführung und Interpretation der qualitativen und quantitativen Bestimmung chemischer oder biochemischer Parameter in Körperflüssigkeiten wie z.B. Blut, Plasma, Serum, Urin, Zerebrospinalflüssigkeit, Faeces, oder anderen Flüssigkeiten. Der POCT-Bereich bezieht sich auf Intensivmedizin, Notfallmedizin bzw. Bed-Side-Testing.

Im Critical-Care bzw. POCT-Bereich werden seit längerem benutzerfreundliche, automatisierte Analysatoren eingesetzt, welche eine Vielzahl unterschiedlicher Parameter bzw. Parametergruppen einer medizinischen Probe bestimmen können. Ein Beispiel dafür ist der modular aufgebaute Analysator AVL-OMNI (AVL Medical Instruments AG, Schaffhausen, CH), welcher über eine Probeneingabe und mehrere für die jeweilige Analyse beliebig anwählbare Messmodule verfügt. Unter anderem können in den Analysator Module zur Messung der Blutgase (pH *P*CO₂, *P*O₂), zur Messung der Elektrolyte (Na⁺, K⁺, Cl⁻, Ca⁺⁺), zur Messung der Metabolite (Glucose, Laktat, Harnstoff, Creatinin), zur Bestimmung von Hämoglobin und für die CO-Oximetrie eingesetzt werden. Das Gerät ist mit einem Computer, einem benutzerfreundlichen Touch-Screen für die Menüsteuerung, einem Thermodrucker für die Datenausgabe, einem Barcodeleser und einer hochwertigen Auswerteelektronik samt Speicher für die Patientendaten ausgestattet.

Das Gerät bietet über seine Menüsteuerung eine Hilfestellung beim Auswechseln von Sensorkassetten, sowie Einsetzen neuer Behälter für die unterschiedlichen Verbrauchsmittel an. So wird beispielsweise beim Öffnen der Klappe für das Kalibriermittel ein Programm gestartet, welches dem Benutzer die weiteren Schritte am Touch-Screen anzeigt. Nach der Entnahme des leeren Kalibriermittelbehälters und Einsetzen eines neuen, vollen Behälters liest das Gerät entweder selbsttätig die Kenndaten via Transponder ein oder der Benutzer wird aufgefordert, mittels Barcodeleser den Barcode am neuen Behälter einzulesen, den Behälter in das vorgesehene Fach im Analysator einzusetzen und die Klappe zu schließen. Durch das Schließen der Klappe wird das Programm beendet und die Daten des Kalibriermittels (Zusammensetzung, Füllmenge, Ablaufdatum usw.) im Gerät gespeichert.

Ähnlich Schritte sind beim Einsetzen neuer Sensoren bzw. einer neuen Sensorkassette durchzuführen, wobei auch am Sensor bzw. an der Sensorkassette ein Barcode mit allen wesentlichen Daten bzw. ein Datenschlüssel für im Analysator gespeicherte Daten vorgesehen ist.

Die Behälter für die Verbrauchsmaterialien weisen zum Teil Füllstandsmesser auf, bei anderen Behältern wird der Füllstand über die entnommenen Flüssigkeitsmengen errechnet und kann über den Touch-Screen jederzeit angezeigt werden.

Aufgabe der vorliegenden Erfindung ist es, ausgehend vom eingangs beschriebenen Betriebs- und Verbrauchsmittelmanagement eine weitere Automatisierung der Verwaltung aller Soft- und Hardwarekomponenten vorzuschlagen sowie einen Analysator bzw. ein Analysensystem derart weiterzubilden, dass die gewünschten Automatisierungsschritte zeit- und kostensparend umgesetzt werden können. Eine weitere Aufgabe besteht darin, das Informationsmanagement in den Bereichen Medizin, Umwelt- und Lebensmitteltechnologie zu verbessern.

Diese Aufgabe wird erfindungsgemäß durch folgende Schritte gelöst:
a) automatisierte Erfassung von Art und maximaler Standzeit der eingesetzten Betriebsmittel sowie Art, Ablaufdaten und Mengenangaben der benötigten Verbrauchsmittel,
b) Eingabe der gewünschten Analysenfrequenz oder automatische Berechnung der voraussichtlichen Analysenfrequenz aus bisherigen Nutzungsdaten des Analysators oder Analysensystems,
c) automatisch Berechnung der pro Zeiteinheit benötigten Betriebs- und Verbrauchsmittel aus den Daten der Schritte a) und b),
d) Ermittlung eines optimalen Bestellzeitpunktes für die benötigten Betriebs- und Verbrauchsmittel,
e) automatisierte Bestellung der Betriebs- und Verbrauchsmittel über eine Einrichtung zur Datenfernübertragung, vorzugsweise über einen Internetanschluss, wobei die Besteilung durch den Analysator vorgeschlagen und vom Benutzer freigegeben oder nach einmaliger Aktivierung einer entsprechenden Funktion vollautomatisch vom Analysator abgewickelt wird.

Der besondere Vorteil des erfindungsgemäßen Verfahrens liegt darin, dass der Benutzer weiter entlastet wird und wesentliche Teile des Betriebs- bzw. Verbrauchsmittelmanagements selbsttätig ablaufen. Die automatische Erfassung der Daten nach dem Einsetzen neuer Sensorkassetten oder Verbrauchsmittel kann - wie eingangs erwähnt - mit Hilfe eines Barcodelesers erfolgen oder durch ein Transpondersystem, bei welchem ein Speicherchip an oder in jeder Sensorkassette und jedem Behälter für Verbrauchsmittel angeordnet ist. Der Speicherchip, beispielsweise am Behälter für das Kalibriermittel, kann auch dafür verwendet werden, den jeweils aktuellen Füllstand des Kalibriermittels abzuspeichern. Weiters muss lediglich die gewünschte Analysenfrequenz, d. h. die pro Zeiteinheit geplanten Analysen, einmal eingegeben werden, bzw. kann auch vom Analysator aufgrund der bekannten Nutzungsdaten vorangegangener Nutzungsperioden vorgeschlagen und vom Benutzer quittiert werden. Es folgt eine automatische Berechnung der pro Zeiteinheit benötigten Betriebs- und Verbrauchsmittel und die Ermitttung eines optimalen Bestellzeitpunktes, wobei der Standort des Analysators und damit die zur Abwicklung der Bestellung und Lieferung benötigte Zeit berücksichtigt wird.

Die automatische Bestellung erfolgt beispielsweise über Internet, wobei ein direkter Kontakt zum Hersteller, zum Betriebsmittellieferanten bzw. zur Servicedienststelle oder zu einem Usercenter hergestellt wird. Das Verfahren ist für den Benutzer äußerst zeitsparend und sicher, da weder Bestellformulare ausgefüllt noch Kontaktadressen verwaltet werden müssen und zudem fehlerhafte Angaben bzw. Fehlbestellungen vermieden werden können.

Besonders vorteilhaft kann über die Einrichtung zur Datenfernübertragung, vorzugsweise über einen Internetanschluss, ein Internetportal für Informationen, insbesondere Produkt-, Software-, Service- Wartungs- und Gebrauchsinformationen, aus den Bereichen Medizin, Umwelt- oder Lebensmitteltechnologie bereitgestellt werden.

In einer besonderen Systemeinstellung ist vorgesehen dass die genannten Informationen während jeder automatisierten Bestellung gemäß Punkt e) aktualisiert werden.

Vorteilhafterweise kann der Internetzugang des Analysators bzw. des Analysensystems in Zusammenhang mit den Ein- und Ausgabeelementen (Tastatur, Bildschirm, Drucker) des Analysators auch zur Bestellung für andere Produkte aus dem POCT-Bereich bzw. im klinischen Umfeld benutzt werden, Der Analysator kann somit eine Portalfunktion aufweisen und dem Benutzer auch das Management von Verbrauchsmaterialien für andere Geräte erleichtern bzw. dem Benutzer Zugang zu elektronischen Informationsmedien (Newsletters, Magazine usw.) anbieten.

Mit einer einmaligen Aktivierung im Setup-Programm des Analysators bzw. bei Vorliegen eines entsprechenden Wartungsvertrages können dem Benutzer aktiv genau jene Informationen und Updates mittels Internet zur Verfügung gestellt werden (Push-Technologie), die auf seine Bedürfnisse bzw. Systemkonfiguration abgestimmt sind und seine Arbeitsbedingungen optimieren.

Von Vorteil ist es weiters, dem Benutzer über die automatische Datenfernübertragung eine Helpfunktion anzubieten. Auf diese Art kann der Benutzer mit dem Hersteller, einem Usercenter, Usergroups, dem Betriebsmittellieferanten oder der Servicedienststelle in Verbindung treten (Chat-Room).

Gemäß einer vorteilhaften Ausgestaltung der Erfindung kann über den Internetanschluss eine Fernreparatur von Hard- oder Softwarekomponenten des Analysensystems durchgeführt werden. Der Fernreparatur geht eine Analyse allfälliger Fehlermeldungen bzw. die Analyse der letzten Kalibrations- und Qualitätskontrollzyklen voraus. Sodann können - ausgelöst von der über Internet in Verbindung stehenden Servicestelle - im Analysator vorkonfigurlerte Serviceroutinen zur Behebung des Fehlers gestartet werden. Weiters können Programme überspielt werden, die unter Nutzung oder Sonderverwendung der im Analysensystem vorhandenen Baugruppen eine Behebung des Fehlers ermöglichen. Beispielsweise können durch wiederholtes Waschen der Probenwege, durch Umkehrung der Fließrichtung oder durch eine Änderung der Reihenfolge bestimmter Funktionsabläufe Ablagerungen oder Verunreinigungen im Probenweg entfernt werden, die durch routinemäßige Wasch- und Reinigungszyklen nicht erfasst werden.

Zur Berechnung der pro Zeiteinheit benötigten Betriebs- und Verbrauchsmittel gemäß Punkt c) kann unter anderem auch die gewünschte Reichweite (Vorratshaltung für einen gewünschten Zeitraum) und/oder die gewünschte Verfügbarkeit (geplante Auslastung) des Analysators eingegeben werden.

In einer Weiterbildung des erfindungsgemäßen Verfahrens ist vorgesehen, dass nach der automatisierten Bestellung der Betriebs- oder Verbrauchsmittel eine Lieferbestätigung abgewartet und bei Lieferverzögerungen ein Warnhinweis am Analysator ausgelöst wird. In diesem Zusammenhang ist es weiters von Vorteil, wenn bei einer verzögerten Lieferung von Betriebs- oder Verbrauchsmitteln die Kalibrations- bzw. Qualitätskontrollzyklen des Analysators entweder entsprechend verlängert werden oder der Analysator automatisch auf ein Not- oder Sparprogramm umgeschaltet wird.

Im erfindungsgemäßen Verfahren ist weiters vorgesehen, dass aus den Daten der Schritte a) und b) Service- und Wartungsintervalle berechnet und über die automatische Datenfernübertragung, vorzugsweise über einen Internetanschluss, entsprechende Service- und Wartungsdienste im Rahmen einer Fernwartung abgerufen bzw. bestellt werden. Soweit die Service- und Wartungsdienste Computersoftware betreffen, ist es in diesem Zusammenhang möglich, neue Versionen von Auswerteprogrammen bzw. Update-Versionen der Betriebssoftware automatisch abzurufen.

Mit dem neuen Verfahren ist es weiter möglich, von Hardware- oder Software-Komponenten des Analysators ausgehende Fehlermeldungen zu erfassen, automatisch eine Fehlerdiagnose zu erstellen und über die automatische Datenfernübertragung entsprechende Service- und Wartungsdienste abzurufen bzw. zu bestellen.

Erfindungsgemäß kann eine automatische Bestellung gemäß Punkt e) auch durch ein negatives Ergebnis eines Kalibrier- oder Qualitätskontrollschrittes des Analysators eingeleitet werden.

In einer Weiterbildung der Erfindung ist vorgesehen, dass aus den in den Punkten a) bis c) automatisch vom Analysator erhobenen Daten das Verbraucherverhalten analysiert und/oder die effektiven Kosten pro Analyse (total costs of ownership TCOO) berechnet werden, sowie dass davon abgeleitet bedarfsoptimierte Analysatoren oder Analysensysteme sowie kostenoptimierte Service- und Wartungspakete angeboten werden. Mit dieser Funktion können die effektiven Kosten pro Test (anteilige Gerätekosten, Service, Verbrauchsmaterialien, Arbeitsund Energiekosten) berechnet werden, mit dem Ziel, dem Kunden die für ihn günstigste Kombination aus Gerät und Wartungsvertrag vorzuschlagen. Weiters kann ein Servicetechniker bei einem Service vor Ort die Kosten der Wartung bzw. des Service eingeben, wonach am Display des Analysators angegeben wird ob bzw. welcher neue Wartungsvertrag kostengünstiger ist.

Eine weitere, der Erfindung zugrunde liegende Aufgabe im Zusammenhang mit Verbesserungen des Informationsmanagements für Analysensysteme und Analysatoren wird dadurch gelöst, dass der Analysator bzw. das Analysensystem über einen Anschluss zur Datenfernübertragung, vorzugsweise einen Internetanschluss, zur automatisierten Übertragung von Bestell-, Service- und Wartungsdaten verfügt und als Internetportal für Informationen, insbesondere Produkt-, Software-, Service- Wartungs- und Gebrauchsinformationen, aus den Bereichen Medizin, Umwelt- oder Lebensmitteltechnologie ausgebildet ist.

Ausgehend von einem Analysator oder Analysensystem für den Bereich Medizin mit einer Einrichtung zur automatisierten Erfassung von Art und maximaler Standzeit der verwendeten Betriebsmittel, sowie Art, Ablaufdaten und Mengenangaben der verwendeten Verbrauchsmittel, weist ein Analysator bzw. eine Analyseneinrichtung zur Durchführung des erfindungsgemäßen Verfahrens zumindest folgende Elemente auf:
- eine Einrichtung zur automatischen Berechnung der voraussichtlichen Analysenfrequenz aus den bisherigen Nutzungsdaten des Analysators oder eine Einrichtung zur Eingabe der gewünschten Analysenfrequenz;
- eine Einrichtung zur Berechnung der pro Zeiteinheit in Abhängigkeit der Betriebs- und Verbrauchsmitteldaten sowie der Analysenfrequenz benötigten Betriebs- und Verbrauchsmittel;
- einen Anschluss zur Datenfernübertragung, vorzugsweise einen Internetanschluss, zur automatisierten Übertragung von Bestell-, Service- und Wartungsdaten.

Gemäß einer Variante ist bei einem Analysator oder Analysensystem eine Einrichtung zur automatischen Berechnung der voraussichtlichen Analysenfrequenz aus den bisherigen Nutzungsdaten des Analysators oder eine Einrichtung zur Eingabe der gewünschten Analysenfrequenz vorgesehen, wobei der Analysator eine Einrichtung aufweist, welche zur Berechnung der pro Zeiteinheit in Abhängigkeit der Betriebs- und/oder Verbrauchsmitteldaten sowie der Analysenfrequenz benötigten Betriebs- und Verbrauchsmittel dient und wobei der Analysator bzw. das Analysensystem welters über einen Anschluss zur Datenfernübertragung, vorzugsweise einen Internetanschluss, zur automatisierten Übertragung von Bestell-, Service- und Wartungsdaten verfügt und als Internetportal für Informationen, insbesondere Produkt-, Software-, Service- Wartungs- und Gebrauchsinformationen aus dem Bereich Medizin ausgebildet ist.

In einer erfindungsgemäßen Ausführungsvariante ist vorgesehen, dass der Anschluss zur Datenfernübertragung in einer rechnergestützten Zentraleinheit des Analysensystems vorliegt, dass ein oder mehrere, autonome Einzelanalysatoren zur Messung jeweils eines Probenparameters oder einer Parametergruppe vorgesehen sind, dass die Einzelanalysatoren in einer ersten Position, mit der Zentraleinheit gekoppelt sind, sowie aus der ersten Position entnehmbar sind und in einer zweiten, vorzugsweise patientenseitigen Messposition einsetzbar sind. Es ist somit möglich, mehrere Analysatoren im Datenverbund einer Zentraleinheit zu betreiben, wobei über die Zentraleinheit die Verbindung zum Internet hergestellt wird.

Dabei kann in vorteilhafter Weise ein Bussystem vorgesehen sein, welches in der ersten Position den lösbaren Kontakt zwischen den Einzelanalysatoren sowie den Kontakt der Einzelanalysatoren zur Zentraleinheit herstellt. Beispielsweise kann das Bussystem einen Datenbus zur Herstellung einer Datenverbindung und/oder einen Fluidbus zum Austausch von Wasch-, Kalibrier- und Qualitätskontrollmitteln und/oder einen Probenbus zum Austausch der zu vermessenden Proben und/oder einen Energieversorgungsbus zwischen den Einzelkomponenten aufweisen.

Weiters kann der Analysator oder das Analysensystem eine Datenverbindung zu einem Laborinformationssystem (Laboratory Information System: LIS), zu einem Krankenhausinformationssystem (Hospital Information System: HIS), und/oder zu weiteren Laborgeräten ohne eigenen Internetanschluss aufweisen. Die notwendigen Datenverbindungen können erfindungsgemäß mittels Funk im 2,4 GHz Bereich erfolgen, wobei das lizenzfreie ISM-Band (Industrial-, Scientific-, Medical-Band) genutzt wird.

Die Erfindung wird im Folgenden anhand von schematischen Zeichnungen näher erläutert. Es zeigen:
- Fig. 1: ein erfindungsgemäßes Analysensystem in einer ersten Ausführungs-variante und
- Fig. 2: eine Variante der Erfindung mit einem modularen Analysensystem.

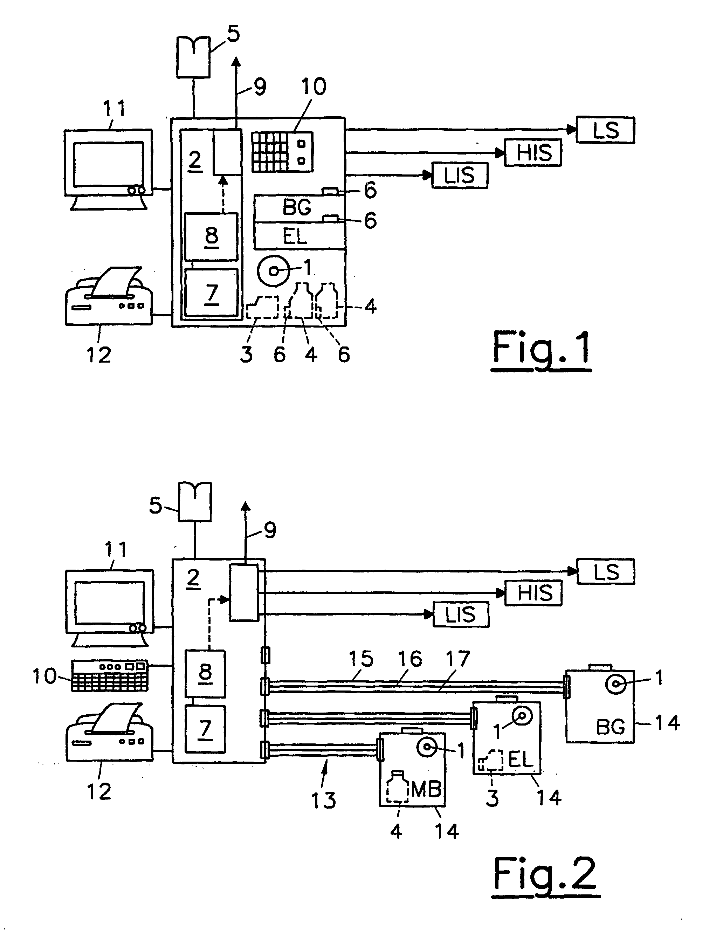

Der in Fig. 1 beispielhaft und schematisch dargestellte medizinische Analysator dient zur Analyse von Vollblutproben, welche über eine Eingabeeinheit 1 in den Analysator eingebracht werden. Im dargestellten Beispiel weist der Analysator ein Modul BG zur Messung der Blutgase (pH, *P*CO₂, *P*O₂) sowie ein Modul EL zur Messung der Elektrolyte (z.B. Na⁺, K⁺, Cl⁻, Ca⁺⁺) auf. Die beiden Module enthalten nicht weiter dargestellte elektrochemische bzw. optochemische Sensoren, deren Messsignale einer Computereinheit 2 mit entsprechenden Steuer- und Auswerteprogrammen zugeführt werden. Weiters enthält der Analysator Behälter 3, 4 zur Aufnahme von Wasch-, Kalibrier- und Qualitätskontrollmittel, welche gesteuert von der Computereinheit 2 in vorgegebenen Zeitabständen eingesetzt werden.

Beispielsweise mit Hilfe eines Barcodelesers 5 und an den Betriebsmitteln bzw. an den Behältern der Verbräuchsmittel angebrachten Barcodes können die Betriebsmitteldaten von elektrochemischen und/oder optochemischen Sensoren des Analysators sowie die Verbrauchsmitteldaten der zu deren Reinigung Kalibrierung und Qualitätskontrolle erforderlichen Wasch-, Kalibrier- und Qualitätskontrollmittel erfasst werden. Die Datenerfassung kann auch via Transponder 6 an den Betriebs- und Verbrauchsmitteln erfolgen.

Die Computereinheit 2 weist weiters eine Einrichtung 7 zur Berechnung der voraussichtlichen Analysenfrequenz aus den bisherigen Nutzungsdaten sowie eine Einrichtung 8 zur Berechnung der pro Zeiteinheit benötigten Betriebs- und/oder Verbrauchsmittel auf. Der Analysator verfügt über einen Anschluss 9 zur Datenfernübertragung, vorzugsweise einen Internetanschluss zur automatisierten Übertragung von den in der Einrichtung 8 erhobenen Bestell-, Service- und Wartungsdaten. Es ist auch möglich, die gewünschte oder voraussichtliche Analysenfrequenz über eine Eingabeeinrichtung bzw. Tastatur 10 einzugeben. Es können separate Ein- und Ausgabegeräte (Tastatur 10, Bildschirm 11) vorgesehen sein, oder kombiniert in einem Touch-Screen direkt im Analysator eingebaut sein. Der Analysator kann weiters einen Drucker 12, eine Datenverbindung zu einem Laborinformationssystem LIS, zu einem Krankenhausinformationssystem HIS und zu weiteren Laborgeräten LS aufweisen. Insbesondere können Geräte angebunden sein, welche über keinen eigenen Internetanschluss verfügen.

In der in Fig. 2 dargestellten Ausführungsvariante weist das Analysensystem eine rechnergestützte Zentraleinheit bzw. eine zentrale Computereinheit 2 sowie damit über ein Bussystem 13 verbundene autonome Einzelanalysatoren 14 auf. Das Bussystem 13 umfasst beispielsweise einen Datenbus 15, einen Energieversorgungsbus 17 und einen Fluidbus 16 zum Austausch von Wasch-, Kalibrier- und Qualitätskontrollmitteln zwischen den Einzelkomponenten. Die Einzelanalysatoren, beispielsweise ein Blutgasanalysator BG, ein Elektrolytanalysator EL sowie ein Analysator für unterschiedliche Metabolite MB, sind in einer ersten Messposition (der in Fig. 2 dargestellten Position) mit der Zentraleinheit zu einem Mehrkomponentenanalysator gekoppelt. Aus dieser Position können die Einzelanalysator 14 nach dem Lösen der Busverbindungen 13 in eine von der Zentraleinheit 2 entfernte Messposition transferiert werden.

Der Datentransfer zwischen der Zentraleinheit 2 und den Einzelanalysatoren 14 sowie die Anknüpfung zu einem Laborinformationssystem LIS bzw. Krankenhausinformationssystem HIS kann auch drahtios mittels Funk im 2,4 GHz-Bereich unter Nutzung des ISM-Bandes erfolgen.

## Patentansprüche

1. Verfahren zur Automatisierung des Betriebsmittel- und Verbrauchsmittelmanagements eines Analysators oder Analysensystems für den medizinischen Bereich, **gekennzeichnet durch** die Schritte:
a. automatisierte Erfassung von Art und maximaler Standzeit der eingesetzten Betriebsmittel sowie Art, Ablaufdaten und Mengenangaben der benötigten Verbrauchsmittel,
b. Eingabe der gewünschten Analysenfrequenz oder automatische Berechnung der voraussichtlichen Analysenfrequenz aus bisherigen Nutzungsdaten des Analysators oder Analysensystems,
c. automatisch Berechnung der pro Zeiteinheit benötigten Betriebs- und Verbrauchsmittel aus den Daten der Schritte a) und b),
d. Ermittlung eines optimalen Bestellzeitpunktes für die benötigten Betriebs- und Verbrauchsmittel,
e. automatisierte Bestellung der Betriebs- und Verbrauchsmittel über eine Einrichtung zur Datenfernübertragung, vorzugsweise über einen Internetanschluss, wobei die Bestellung **durch** den Analysator vorgeschlagen und vom Benutzer freigegeben oder nach einmaliger Aktivierung einer entsprechenden Funktion vollautomatisch vom Analysator abgewickelt wird.

2. Verfahren nach Anspruch 1 **dadurch gekennzeichnet, dass** über die Einrichtung zur Datenfernübertragung, vorzugsweise über einen Internetanschluss, ein Internetportal für Informationen, insbesondere Produkt-, Software-, Service- Wartungs- und Gebrauchsinformationen, aus den Bereichen Medizin, Umwelt- oder Lebensmitteltechnologie bereitgestellt wird.

3. Verfahren nach Anspruch 2, **dadurch gekennzeichnet, dass** die Produkt-, Software-, Service- Wartungs- und Gebrauchsinformationen während jeder automatisierten Bestellung gemäß Punkt e) aktualisiert werden.

4. Verfahren nach einem der Ansprüche 1 bis 3, **dadurch gekennzeichnet, dass** in Punkt a) die Betriebsmitteldaten von elektrochemischen und/oder optochemischen Sensoren des Analysators sowie die Verbrauchsmitteldaten der zu deren Reinigung, Kalibrierung und Qualitätskontrolle erforderlichen Wasch-, Kalibrier- und Qualitätskontrollmittel erfasst werden.

5. Verfahren nach einem der Ansprüche 1 bis 4, **dadurch gekennzeichnet, dass** nach der automatisierten Bestellung der Betriebs- oder Verbrauchsmittel eine Lieferbestätigung abgewartet und bei Lieferverzögerungen ein Warnhinweis am Analysator ausgelöst wird.

6. Verfahren nach Anspruch 5, **dadurch gekennzeichnet, dass** bei einer verzögerten Lieferung von Betriebs- oder Verbrauchsmitteln die Kalibrations- bzw. Qualitätskontrollzyklen des Analysators automatisch entsprechend verlängert werden.

7. Verfahren nach Anspruch 5, **dadurch gekennzeichnet, dass** bei einer verzögerten Lieferung von Betriebs- oder Verbrauchsmitteln die Kalibrations- bzw. Qualitätskontrollzyklen des Analysators automatisch auf ein Not- oder Sparprogramm umgeschaltet werden.

8. Verfahren nach einem der Ansprüche 1 bis 7, **dadurch gekennzeichnet, dass** aus den Daten der Schritte a) und b) Service- und Wartungsintervalle berechnet und über die automatische Datenfernübertragung, vorzugsweise über einen Internetanschluss, entsprechende Service- und Wartungsdienste abgerufen bzw. bestellt werden.

9. Verfahren nach einem der Ansprüche 1 bis 8, **dadurch gekennzeichnet, dass** von Hardware- oder Softwarekomponenten des Analysators ausgehende Fehlermeldungen erfasst und über die automatische Datenfernübertragung, vorzugsweise über einen Internetanschluss, entsprechende Service- und Wartungsdienste abgerufen bzw. bestellt werden.

10. Verfahren nach einem der Ansprüche 4 bis 9, **dadurch gekennzeichnet, dass** durch ein negatives Ergebnis eines Kalibrier- oder Qualitätskontrollschrittes eine automatische Bestellung gemäß Punkt e) eingeleltet wird.

11. Verfahren nach einem der Ansprüche 1 bis 10, **dadurch gekennzeichnet, dass** dem Benutzer über die automatische Datenfernübertragung, vorzugsweise über den Internetanschluss eine Helpfunktion sowie ein Zugang zu Usergroups, zu einem Usercenter und/oder zu elektronischen Informationsmedien angeboten wird.

12. Verfahren nach einem der Ansprüche 1 bis 11, **dadurch gekennzeichnet, dass** über die automatische Datenfernübertragung, vorzugsweise über den Internetanschluss eine Fernreparatur von Hard- oder Softwarekomponenten des Analysators durchgeführt wird.

13. Verfahren nach einem der Ansprüche 1 bis 12, **dadurch gekennzeichnet, dass** aus den in den Punkten a) bis c) automatisch vom Analysator erhobenen Daten das Verbraucherverhalten analysiert und/oder die effektiven Kosten pro Analyse berechnet werden, sowie dass davon abgeleitet bedarfsoptimierte Analysatoren oder Analysensysteme sowie kostenoptimierte Service- und Wartungspakete angeboten werden.

14. Analysator oder Analysensystem für den Bereich Medizin mit einer Einrichtung (5, 6) zur automatisierten Erfassung von Art und maximaler Standzeit der verwendeten Betriebsmittel, sowie Art, Ablaufdaten und Mengenangaben der verwendeten Verbrauchsmittel, **dadurch gekennzeichnet, dass** eine Einrichtung (7) zur automatischen Berechnung der voraussichtlichen Analysenfrequenz aus den bisherigen Nutzungsdaten des Analysators oder eine Einrichtung (10) zur Eingabe der gewünschten Analysenfrequenz vorgesehen ist, dass der Analysator eine Einrichtung (8) aufweist, welche zur Berechnung der pro Zeiteinheit in Abhängigkeit der Betriebs- und Verbrauchsmitteldaten sowie der Analysenfrequenz benötigten Betriebsund Verbrauchsmittel dient, sowie dass der Analysator über einen Anschluss zur Datenfernübertragung (9), vorzugsweise einen Internetanschluss, zur automatisierten Übertragung von Bestell-, Service- und Wartungsdaten verfügt.

15. Analysensystem zur Bestimmung medizinischer Probenparameter nach Anspruch 14, **dadurch gekennzeichnet, dass** der Anschluss zur Datenfernübertragung (9) in einer rechnergestützten Zentraleinheit (2) des Analysensystems vorliegt, dass ein oder mehrere, autonome Einzelanalysatoren (14) zur Messung jeweils eines Probenparameters oder einer Parametergruppe vorgesehen sind, dass die Einzelanalysatoren (14) in einer ersten Position mit der Zentraleinheit (2) gekoppelt sind, sowie aus der ersten Position entnehmbar und in einer zweiten, vorzugsweise patientenseitigen Messposition einsetzbar sind.

16. Analysensystem nach Anspruch 15, **dadurch gekennzeichnet, dass** ein Bussystem (13) vorgesehen ist, welches in der ersten Position den lösbaren Kontakt zwischen den Einzelanalysatoren (14) Bowie den Kontakt der Einzelanalysatoren (14) zur Zentraleinheit (2) herstellt.

17. Analysensystem nach Anspruch 16, **dadurch gekennzeichnet, dass** das Bussystem (13) einen Datenbus (15) zur Herstellung einer Datenverbindung und/oder einen Fluidbus (16) zum Austausch von Wasch-, Kalibrier- und Qualitätskontrollmitteln und/oder einen Probenbus zum Austausch der zu vermessenden Proben und/oder einen Energieversorgungsbus (17) zwischen den Einzelkomponenten (2, 14) aufweist.

18. Analysensystem nach einem der Ansprüche 14 bis 17, **dadurch gekennzeichnet, dass** der Analysator oder das Analysensystem eine Datenverbindung zu einem Laborinformationssystem (LIS), zu einem Krankenhausinformationssystem (HIS), und/oder zu weiteren Laborgeräten (LS) aufweist.

19. Analysensystem nach Anspruch 18, **dadurch gekennzeichnet, dass** die Datenverbindung mittels Funk im 2,4 GHz Bereich erfolgt und das ISM-Band (Industrial-, Scientific-, Medical-Band) nutzt.

20. Analysator oder Analysensystem für den Bereich Medizin, **dadurch gekennzeichnet, dass** eine Einrichtung (7) zur automatischen Berechnung der voraussichtlichen Analysenfrequenz aus den bisherigen Nutzungsdaten des Analysators oder eine Einrichtung (10) zur Eingabe der gewünschten Analysenfrequenz vorgesehen ist, dass der Analysator eine Einrichtung (8) aufweist, welche zur Berechnung der pro Zeiteinheit in Abhängigkeit der Betriebs- und/oder Verbrauchsmitteidaten sowie der Analysenfrequenz benötigten Betriebs- und Verbrauchsmittel dient, dass der Analysator bzw. das Analysensystem über einen Anschluss zur Datenfernübertragung (9), vorzugsweise einen Internetanschluss, zur automatisierten Übertragung von Bestell-, Service- und Wartungsdaten verfügt und als Internetportal für Informationen, insbesondere Produkt-, Software-, Service- Wartungs- und Gebrauchsinformationen aus dem Bereich Medizin ausgebifdet ist.

## Claims

1. Automation process for the management of operating materials and supplies of an analyzer or analyzing system for use in the medical field, **characterized by** the following steps:
(a) automatic recording of type and maximum useful life of the operating materials used, as well as types, expiry dates and quantities of the required supplies,
(b) entering the desired frequency of analysis, or automatic calculation of the estimated frequency of analysis from past frequencies of use of the analyzer or analyzing system,
(c) automatic calculation of the operating materials and supplies required per unit of time, based on the data obtained in steps (a) and (b),
(d) determining an optimum point in time for ordering the required operating materials and supplies,
(e) automated ordering of the operating materials and supplies via a device for remote data transmission, preferably via an internet connection, where the ordering is proposed by the analyzer and confirmed by the user, or is effected fully automatically by the analyzer after a corresponding function has been activated once.

2. A process according to claim 1, **characterized in that** the unit for remote data transmission, preferably an internet connection, is used to provide an internet portal for information, especially information on products, software, service, maintenance, and use in the medical field.

3. A process according to claim 2, **characterized in that** the information on products, software, service, maintenance, and use is updated each time an automatic order is placed according to step (e).

4. A process according to any of claims 1 to 3, **characterized in that** in step (a) the data of operating materials, such as electrochemical and/or optochemical sensors of the analyzer, and the data of supply materials, such as the washing, calibrating and quality control media required for cleaning, calibration and quality control of said sensors, will be recorded.

5. A process according to any of claims 1 to 4, **characterized in that** subsequent to the automated ordering of operating materials or supplies a confirmation of delivery will be waited for and, if delivery is delayed, a warning will be displayed on the analyzer.

6. A process according to claim 5, **characterized in that** in the instance of delayed delivery of operating materials or supplies the calibration and quality control cycles of the analyzer will be correspondingly extended.

7. A process according to claim 5, **characterized in that** in the instance of delayed delivery of operating materials or supplies the calibration and quality control cycles of the analyzer will be switched over to an emergency or economy program.

8. A process according to any of claims 1 to 7, **characterized in that** the data obtained in steps (a) and (b) are used to calculate service and maintenance intervals, and the respective service and maintenance jobs are requested or ordered via the automatic remote data transmission, preferably an internet connection.

9. A process according to any of claims 1 to 8, **characterized in that** error messages arriving from hardware or software components of the analyzer are recorded, and the respective service and maintenance jobs are requested or ordered via the automatic remote data transmission, preferably an internet connection.

10. A process according to any of claims 4 to 9, **characterized in that** an automatic order is initiated according to step (e) in response to a negative result returned by a calibrating or quality control step of the analyzer.

11. A process according to any of claims 1 to 10, **characterized in that** the user is offered a help function via the automatic remote data transmission, preferably an internet connection, as well as access to user groups, a user center, and/or electronic information media.

12. A process according to any of claims 1 to 11, **characterized in that** the automatic remote data transmission, preferably the internet connection, is used for remote repair of hardware or software components of the analyzer.

13. A process according to any of claims 1 to 12, **characterized in that** the data collected automatically by the analyzer in steps (a) to (c) are used to analyze consumer behavior and/or calculate the effective costs for each analysis, and that demand-optimized analyzers or analyzing systems as well as cost-optimized service and maintenance packages are offered on the basis of this information.

14. Analyzer or analyzing system for applications in the medical field, with a device (5, 6) for automatic recording of the type and maximum useful life of operating materials used, as well as types, expiry dates and quantities of supplies used, **characterized in that** a device (7) is provided for automatically calculating the estimated frequency of analysis from past frequencies of use of the analyzer, or a device (10) for entering the desired frequency of analysis, and that the analyzer includes a device (8) for calculating the operating materials and supplies required per unit of time in dependence of the data on operating materials and supplies and the frequency of analysis, and further that the analyzer is provided with a connection for remote data transmission (9), preferably an internet connection, for the purpose of automated transmission of data concerning product ordering, service and maintenance.

15. Analyzing system for determination of medical sample parameters according to claim 14, **characterized in that** the connection for remote data transmission (9) is provided in a computer-supported central unit (2) of the analyzing system, and that one or several independent single analyzers (14) are provided for determining one sample parameter or parameter group each, and that the single analyzers (14) are coupled to the central unit (2) in a first position, from which first position they can be removed in order to be inserted in a second position, preferably a measuring position next to the patient.

16. Analyzing system according to claim 15, **characterized in that** a bus system (13) is provided, which will establish in the first position a releasable contact between the single analyzers (14), and the contact between single analyzers (14) and central unit (2).

17. Analyzing system according to claim 16, **characterized in that** the bus system (13) is provided with a data bus (15) to establish a data link, and/or a fluid bus (16) to exchange washing, calibrating and quality control media, and/or a sample bus to exchange the samples to be tested, and/or an energy supply bus (17), between the individual components (2, 14).

18. Analyzing system according to any of claims 14 to 17, **characterized in that** said analyzer or analyzing system is provided with a data link to a laboratory information system (LIS), and a hospital information system (HIS), and/or further laboratory systems (LS).

19. Analyzing system according to claim 18, **characterized in that** said data link is effected by means of wireless technology in the 2.4 GHz range, utilizing the license-free ISM band (industrial, scientific, medical band).

20. Analyzer or analyzing system for applications in the medical field, **characterized in that** a device (7) is provided for automatically calculating the estimated frequency of analysis from past frequencies of use of the analyzer, or a device (10) for entering the desired frequency of analysis, and that the analyzer includes a device (8) for calculating the operating materials and supplies required per unit of time in dependence of the data on operating materials and supplies and the frequency of analysis, and further that the analyzer or analyzing system is provided with a connection for remote data transmission (9), preferably an internet connection, for the purpose of automated transmission of data concerning product ordering, service and maintenance, and is configured as an internet portal for information, especially information on products, software, service, maintenance, and use in the medical field.

## Revendications

1. Procédé pour automatiser la gestion des moyens d'exploitation et des moyens consommables d'un analyseur ou d'un système analyseur destiné au domaine médical, **caractérisé en ce qu**'il comprend les étapes de :
a. saisie automatique des informations relatives à la nature et à la durée de vie utile maximale des moyens d'exploitation mis en oeuvre, ainsi qu'à la nature, la date limite d'utilisation et les quantités nécessaires des moyens consommables,
b. introduction de la fréquence souhaitée des analyses ou calcul automatique de la fréquence prévue des analyses à partir des informations courantes concernant l'utilisation de l'analyseur ou du système analyseur,
c. calcul automatique des moyens d'exploitation et des moyens consommables nécessaires par unité de temps, à partir des informations obtenues aux étapes a) et b),
d. détermination du moment optimum pour commander les moyens d'exploitation et les moyens consommables nécessaires,
e. commande automatique de moyens d'exploitation et de moyens consommables par l'intermédiaire d'une installation permettant de transférer à distance des informations, de préférence par une connexion Internet, la commande prévue par l'analyseur étant confirmée par l'utilisateur ou effectuée totalement automatiquement par l'analyseur, par l'activation d'une fonction correspondante.

2. Procédé selon la revendication 1, **caractérisé en ce que** l'installation permettant de transférer à distance des informations, de préférence par une connexion Internet, permet d'accéder à un portail Internet pour obtenir des informations, en particulier des informations concernant les produits, les logiciels, l'entretien la révision et l'utilisation, ainsi que des informations sur des technologies dans le domaine médical, environnemental et alimentaire.

3. Procédé selon la revendication 2, **caractérisé en ce que** les informations concernant les produits, les logiciels, l'entretien, la révision et l'utilisation sont remises à jour lors de chaque commande automatique de l'étape e).

4. Procédé selon l'une des revendications 1 à 3, **caractérisé en ce qu**'à l'étape a), une saisie est effectuée des informations concernant les moyens d'exploitation que sont les sondes électrochimiques et / ou optochimiques des analyseurs, ainsi que des informations concernant les moyens consommables de lavage, de calibrage et de contrôle de qualité, qui sont nécessaires aux opérations de lavage, de calibrage et de contrôle de qualité.

5. Procédé selon l'une des revendications 1 à 4, **caractérisé en ce qu**'après la commande automatique des moyens d'exploitation ou des moyens consommables, il est prévu de recevoir une confirmation de livraison et qu'en cas de retard dans la livraison, un signal d'alarme est émis sur l'analyseur.

6. Procédé selon la revendication 5, **caractérisé en ce qu**'en cas de retard dans la livraison de moyens d'exploitation ou de moyens consommables, la durée du cycle de calibrage ou / et la durée du cycle de contrôle de qualité de l'analyseur est ou sont augmentées automatiquement et de la manière appropriée.

7. Procédé selon la revendication 5, **caractérisé en ce qu'**en cas de retard dans la livraison de moyens d'exploitation ou de moyens consommables, le cycle de calibrage ou / et le cycle de contrôle de qualité de l'analyseur passe ou passent automatiquement sur un programme de rationnement ou d'économie.

8. Procédé selon l'une des revendications 1 à 7, **caractérisé en ce que** les informations des étapes a) et b) sont utilisées pour calculer les intervalles de temps entre les opérations d'entretien et de révision et **en ce que** les appels ou demandes pour une opération d'entretien ou de révision sont effectués par l'installation automatique permettant de transférer à distance des informations, de préférence par une connexion Internet.

9. Procédé selon l'une des revendications 1 à 8, **caractérisé en ce que** les messages d'erreur provenant des logiciels ou de composants machine de l'analyseur sont captés et les services d'entretien ou de révision concernés sont appelés ou demandés par l'installation automatique permettant de transférer à distance des informations, de préférence par une connexion Internet.

10. Procédé selon l'une des revendications 4 à 9, **caractérisé en ce qu'**un résultat négatif lors d'une opération de calibrage ou de contrôle de qualité enclenche automatiquement une commande, conformément à l'étape e).

11. Procédé selon l'une des revendications 1 à 10, **caractérisé en ce que** l'utilisateur a la possibilité d'accéder via l'installation automatique permettant de transférer à distance des informations, de préférence par une connexion Internet, à un service d'assistance, ainsi qu'aux services d'un groupement d'utilisateurs, d'un centre pour utilisateurs et / où à des moyens d'information électroniques.

12. Procédé selon l'une des revendications 1 à 11, **caractérisé en ce qu**'une réparation à distance de logiciels ou de composants machine de l'analyseur est effectuée via l'installation automatique permettant de transférer à distance des informations, de préférence par la connexion Internet.

13. Procédé selon l'une des revendications 1 à 12, **caractérisé en ce que** les informations obtenues automatiquement de l'analyseur aux étapes a) à c) sont utilisées pour analyser le comportement de l'utilisateur et / ou pour effectuer un calcul des coûts effectifs par analyse, ce qui permet d'en déduire l'analyseur ou le système analyseur optimisé en fonction des besoins et de proposer un service global d'entretien et de révision optimisé sur le plan des coûts.

14. Analyseur ou système analyseur destiné au domaine médical avec une installation (5, 6) pour saisir automatiquement des informations relatives à la nature et à la durée de vie utile maximale des moyens d'exploitation utilisés, ainsi qu'à la nature, à la date limite d'utilisation et aux quantités nécessaires des moyens consommables utilisés, **caractérisé en ce que** l'on prévoit une installation (7) pour calculer automatiquement la fréquence prévisible des analyses à partir des informations courantes concernant l'utilisation de l'analyseur, ou une installation (10) pour introduire la fréquence souhaitée des analyses, **en ce que** l'analyseur comporte une installation (8) qui sert à calculer par unité de temps et en fonction des informations relatives aux moyens d'exploitation et aux moyens consommables, ainsi que de la fréquence des analyses, les moyens d'exploitation et les moyens consommables nécessaires, et, également, **en ce que** l'analyseur permet, par une connexion (9) permettant de transférer à distance des informations, de préférence par une connexion Internet, un transfert automatique d'informations concernant les commandes, l'entretien et les réparations.

15. Système analyseur pour déterminer des paramètres médicaux d'échantillons selon la revendication 14, **caractérisé en ce que** la connexion (9) permettant de transférer à distance des informations se trouve dans une unité centrale automatisée (2) du système analyseur, **en ce qu'**un ou plusieurs analyseurs individuels et autonomes (14) sont prévus pour mesurer chacun un paramètre ou un groupe de paramètres des échantillons, **en ce que** les analyseurs individuels (14) sont couplés avec l'unité centrale (2) dans une première position et qu'ils peuvent être sortis de la première position et mis dans une seconde position de mesure, de préférence sur un patient.

16. Système analyseur selon la revendication 15, **caractérisé en ce que** l'on prévoit un système de lignes (13) qui, dans la première position, permet une communication contrôlée entre les analyseurs individuels (14) et également une communication entre les analyseurs individuels (14) et l'unité centrale (2).

17. Système analyseur selon la revendication 16, **caractérisé en ce que** le système de lignes (13) comprend une ligne (15) pour les informations permettant une circulation des informations et / ou une ligne (16) pour les fluides permettant une alimentation en milieu de lavage, de calibrage et de contrôle de qualité et / ou une ligne pour les échantillons, permettant le prélèvement des échantillons à analyser et / ou une ligne (17) d'alimentation en énergie entre les composants individuels (2, 14).

18. Système analyseur selon l'une des revendications 14 à 17, **caractérisé en ce que** l'analyseur ou le système d'analyseurs comporte ou comportent une liaison pour les informations aboutissant à un système d'information de laboratoire (LIS), à un système d'information hospitalier (HIS) et /ou à d'autres appareils de laboratoire (LS).

19. Système analyseur selon la revendication 18, **caractérisé en ce que** la liaison pour les informations fait appel à des ondes hertziennes dans la région de 2,4 GHz et que l'on utilise la bande ISM (Industrial, scientific, medical band).

20. Analyseur ou système analyseur destiné au domaine médical, **caractérisé en ce que** l'on prévoit une installation (7) pour calculer automatiquement la fréquence prévisible des analyses à partir des informations courantes concernant l'utilisation de l'analyseur ou une installation (10) pour introduire la fréquence d'analyses souhaitée, **en ce que** l'analyseur comporte une installation (8) qui sert au calcul des besoins, par unité de temps, en moyens d'exploitation et / ou en moyens consommables nécessaires, en fonction d'informations concernant les moyens d'exploitation et / ou les moyens consommables, ainsi que de la fréquence des analyses, **en ce que** l'analyseur ou le système analyseur comporte une connexion (9) permettant de transférer des informations à distance, en particulier une connexion Internet, permettant de transférer automatiquement des d'informations concernant les commandes, l'entretien ou les réparations, donnant accès à un portail Internet permettant d'obtenir des informations, en particulier des informations relatives aux produits, aux logiciels, à l'entretien, aux révisions et aux utilisations dans le domaine médical.
